# EUROPÄISCHE PATENTANMELDUNG

(11) **EP 2 048 399 A1**
(43) Veröffentlichungstag der Anmeldung: **15.04.2009**
(21) Anmeldenummer: 08016464.3
(22) Anmeldetag: 18.09.2008
(51) Int. Cl.: F16D 25/08

(54) **Kupplungsnehmerzylinder**

(30) Priorität: 11.10.2007 DE 102007048713
(71) Anmelder: LuK Lamellen und Kupplungsbau Beteiligungs KG, 77815 Bühl (DE)
(72) Erfinder: Heller, Jean-Francois, 67100 Strassburg (FR)

(57) **Zusammenfassung**

Es wird ein Kupplungsnehmerzylinder (1) vorgeschlagen, der konzentrisch um eine Getriebeeingangswelle angeordnet ist und einen becherförmigen Kolben (7) enthält, der einen ringförmigen axialen Ansatz (5) radial außen und radial innen unter Bildung einer von einer Druckversorgungsquelle beaufschlagten Druckkammer umgibt.

## Beschreibung

Die Erfindung betrifft einen konzentrisch um eine Getriebeeingangswelle angeordneten Kupplungsnehmerzylinder mit einem axial verlagerbaren Kolben.

Derartige Kupplungsnehmerzylinder sind aus dem Stand der Technik als sogenannte CSC (Concentric Slave Cylinder) bekannt. Die DE 199 23 853 A1 zeigt beispielsweise einen derartigen Kupplungsnehmerzylinder, bei dem ein Ringkolben in einer von einem Gehäuse und einer Führungshülse gebildeten, von einem Geberzylinder beaufschlagten Kammer axial verschiebbar aufgenommen ist und in Abhängigkeit vom in der Kammer anliegenden Druck über ein Wälzlager eine Kupplung betätigt wird.

Weiterhin sind Kupplungsnehmerzylinder beispielsweise aus der DE 199 51 414 A1 bekannt, deren Gehäuse und Führungshülse komplett und einstückig aus Kunststoff hergestellt sind.

Aufgabe der vorliegenden Erfindung ist die Weiterbildung des Stands der Technik insbesondere im Hinblick auf eine weitere Vereinfachung der Bauform und eine Verringerung des Bauraumbedarfs.

Die Aufgabe wird durch einen Kupplungsnehmerzylinder mit einem um eine Getriebeeingangswelle angeordneten Gehäuse und einem zu diesem axial unter Druck verlagerbaren Kolben gelöst, wobei der Kolben einen ringförmigen Becher bildet und einen ringförmigen axialen Ansatz des Gehäuses radial innen und radial außen axial übergreift. Der vorgeschlagene Aufbau sieht einen Kupplungsnehmerzylinder vor, dessen Gehäuse an einer Gehäusewand des Getriebes befestigt ist und keine Führungshülse aufweist. Vielmehr kragt das Gehäuse in axiale Richtung zur Kupplung hin nur in Form eines ringförmigen Ansatzes aus, so dass verglichen mit einer Vollkunststoffausführung bedeutend Material und damit radialer Bauraum eingespart werden kann, da bei einer vorgegebenen Festigkeit des verwendeten Kunststoffs die wegen statischer Vorgaben vorzuhaltenden Materialdicken nicht doppelt - für Führungshülse und radial äußere Dichtungswand - anzusetzen sind. Gegenüber Kupplungsnehmerzylindern mit Führungshülsen aus Stahl weist das verwendete Kunststoffgehäuse den Vorteil einer verbesserten Dichtigkeit insbesondere in Langzeitanwendungen infolge der Einteiligkeit auf. Der Kolben in Form eines ringförmigen Bechers kann eng an die Kontur des axialen Ansatzes angepasst werden.

Als besonders vorteilhaft hat es sich gezeigt, wenn der Kolben aus Blech gefertigt wird. Insbesondere Tiefziehverfahren eignen sich für dessen Herstellung. Dabei kann die radial innere Ringwand quasi bis zur Begrenzung des Gehäuses in Richtung der Getriebegehäusewand ausgedehnt werden, wodurch eine verbesserte axiale Führung des Kolbens auf dem axialen Ansatz erzielt werden kann.

Das Gehäuse wird vorzugsweise aus Kunststoff hergestellt, beispielsweise mittels Spritzgießverfahren, so dass Befestigungsöffnungen zur Aufnahme des Gehäuses an der Gehäusewand des Getriebes, die vorzusehenden Sachlöcher im axialen Ansatz und zur Druckmittelzufuhr samt einer Buchse zum Anschluss einer Druckleitung bereits werkzeugfallend vorgesehen werden können. Weiterhin können Ringnuten zur Aufnahme der Dichtungen zwischen Kolben und Gehäuse im Gehäuse bereits werkzeugfallend vorgesehen werden.

Die Dichtung zwischen Kolben und Gehäuse kann mittels einer an der Hülse vorgesehenen dynamischen Dichtung oder aber bevorzugt mittels einer oder mehrerer statisch an dem axialen Ansatz angebrachten Dichtungen vorgesehen werden. So kann beispielsweise an der Stirnseite des axialen Ansatzes eine Nutringdichtung vorgesehen sein, die in ähnlicher Weise radial und/oder axial spielbehaftet angebracht sein kann, wie eine Nutringdichtung an einem Kolben in herkömmlichen CSC's, indem beispielsweise eine Ringwulst in einen Hinterschnitt des stirnseitigen Endes des axialen Ansatzes eingepresst wird. Die beiden Dichtlippen dichten dabei selbstverstärkend gegen die äußere und innere Ringwand des Kolbens ab.

Alternativ hierzu kann in dem axialen Ansatz des Gehäuses vorzugsweise zur Minimierung des Totvolumens nahe an dessen stirnseitigem Ende radial außen und radial innen jeweils eine Ringnut vorgesehen sein, in die jeweils eine Dichtung eingebracht ist. Bei den Dichtungen kann es sich im einfachsten Fall um O-Ringe handeln, andere Dichtringarten beispielsweise sogenannte Quadringe oder Dichtringe mit Dichtlippen können bevorzugt verwendet werden. Insbesondere bei sehr inelastischen Dichtungen kann der axiale Ansatz jeweils radial außen und innen einen Absatz aufweisen, auf dem jeweils eine Dichtung aufgebracht wird. Die axiale Sicherung am offenen Ende des Ansatzes erfolgt nach Montage der Dichtungen mittels eines am axialen Ansatz befestigten, beispielsweise mit diesem verrasteten, ultraschallverschweißten oder verkrallten Anschlagrings.

An dem Kolben wird ein Wälzlager zur Drehentkoppelung des Kolbens von dem Hebelsystem der Kupplung angebracht. Es kann mit dem Kolben verschweißt, beispielsweise punktverschweißt, verkrallt oder geschrumpft sein. Zum Ausgleich von Achsversätzen oder eines Winkels zwischen der Drehachse der auf der Kurbelwelle aufgenommenen Kupplung und dem auf die Getriebeeingangswelle zentrierten Kupplungsnehmerzylinder kann das Wälzlager einen Winkel- und/oder Versatzausgleich aufweisen. Vorteilhaft kann auch sein, wenn das Wälzlager bereits verschwenkbar auf dem Kolben aufgenommen ist. Weiterhin kann vorteilhaft sein, wenn der Innenring des Lagers beispielsweise aus Festigkeitsgründen mit dem Kolben axial überlappt. Auf diese Weise können die Wälzkörper radial außerhalb des Kolbens geführt werden, so dass die Anlagefläche des Außenrings für das Hebelsystem direkt am innenring und damit im Bereich der Stirnfläche des Kolbens anliegt.

Es versteht sich, dass eine Druckfeder zur Vorspannung des Wälzlagers mit dem Hebelsystem der Kupplung zwischen Kolben und Gehäuse, beispielsweise radial außerhalb der äußeren Ringwand des Kolbens zwischen dem Lagerinnenring und dem Gehäuse vorgesehen sein kann.

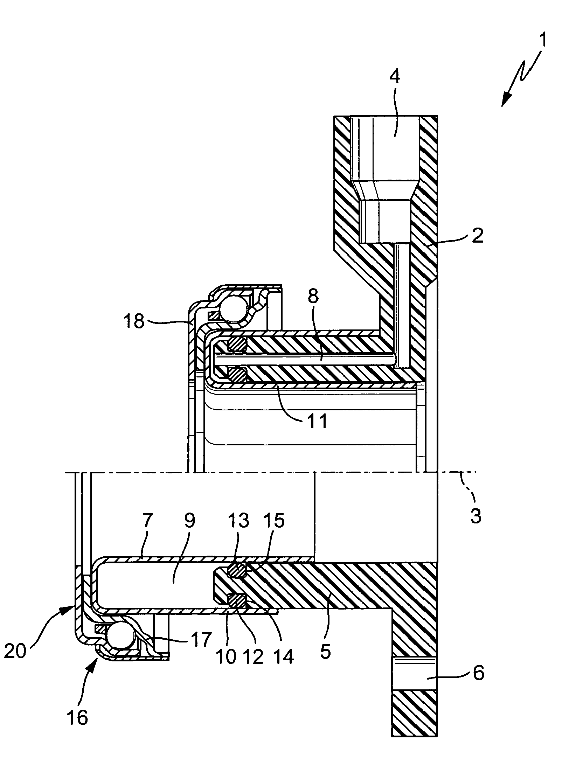

Die Erfindung wird anhand der einzigen Figur näher erläutert. Die Figur zeigt ein Ausgestaltungsbeispiel eines Kupplungsnehmerzylinders 1 im Längsschnitt mit einem Gehäuse 2, das mittels in das Gehäuse 2 eingebrachter Befestigungsöffnungen 6, die mit Buchsen verstärkt sein können, an dem Getriebegehäuse beispielsweise mittels Schrauben oder Nieten um die Drehachse 3 der Getriebeeingangswelle zentriert aufgenommen ist. Das Gehäuse 2 verfügt über einen oder mehrere Druckanschlüsse 4 zur Verbindung mit einer Druckleitung, eines Entlüftungsventils, eines Schwingungsfilters und/oder eines Druckbegrenzungsventils. Die an den Druckanschluss mündende Verbindung führt zu einer Druckversorgungsquelle, die ein manuell oder automatisch betätigter Geberzylinder oder eine Hydraulikpumpe sein kann.

Das Gehäuse 2 ist in Richtung der Drehachse 3 axial in Form eines ringförmigen Ansatzes 5 erweitert, auf dem der Kolben 7 axial verlagerbar aufgenommen ist. Zu beachten ist, dass der Kolben 7 in der oberen Hälfte einer von der Drehachse gezogenen Trennlinie in seiner zurückgezogenen, drucklosen Stellung und in der unteren Hälfte unter Druck in einer Stellung mit maximalem Verfahrweg dargestellt ist. Abhängig vom am Druckanschluss anliegenden und über die Leitung 8 zu der Kammer 9 übertragenen Druck wird der Kolben 7 axial verlagert. Dabei wird der Kolben 7 mittels der äußeren Ringwand 10 und der inneren Ringwand 11 am axialen Ansatz 5 geführt. Die beiden Ringwände 10, 11 sind jeweils mittels einer am axialen Ansatz statisch aufgenommenen Dichtung 12, 13 gegenüber dem axialen Ansatz abgedichtet. Die Dichtungen 12, 13 sind in einer radial äußeren und radial inneren Ringnut 14, 15 axial fixiert. Alternative Befestigungen der Dichtungen 13, 14 können insbesondere zur besseren Darstellbarkeit des Gehäuses 2 in einem Spritzgussverfahren einen axialen Ansatz 5 ohne Ringnuten vorsehen, wobei am axialen Ansatz oder an einem stirnseitigen, ringförmigen Bord jeweils für die radial äußere und radial innere Dichtung ein ringförmiger Absatz vorgesehen ist, der mit dem axialen Ansatz stoff- und/oder formschlüssig unter Bildung zweier Ringnuten fest verbunden, beispielsweise verhakt, verrastet, verklebt oder verschweißt wie reibverschweißt oder ultraschallverschweißt wird.

An der Stirnseite des Kolbens 7 ist ein Wälzlager 16 mit dem Kolben 7 verbunden und entkoppelt das drehende Hebelsystem, das eine Tellerfeder einer zu- oder aufgedrückten Kupplung sein kann, vom drehfest angeordneten Kolben 7. In dem gezeigten Ausführungsbeispiel ist der Lagerinnenring 17 mit dem Kolben 7 fest verbunden, beispielsweise punktverschweißt. Andere Ausgestaltungsbeispiele können gegenüber dem Kolben 7 begrenzt verschwenkbare oder verkippbare Wälzlager vorsehen. Der Lageraußenring 18 bildet die Anschlagfläche 20 zum Hebelsystem der Kupplung. Der Lagerinnenring 17 ist radial über den Kolben 7 hinaus und axial den Kolben 7 übergreifend angeordnet, so dass die über den Umfang des Wälzlagers 16 verteilten Wälzkörper 19 radial außerhalb des Kolbens 7 angeordnet sind, so dass die Anschlagfläche 20 direkt am Innenring 17 anliegt und eine besonders platzsparende Anordnung des Wälzlagers erfolgt.

**Bezugszeichenliste**

| | | | |
|---|---|---|---|
| 1 | Kupplungsnehmerzylinder | 11 | Innere Ringwand |
| 2 | Gehäuse | 12 | Dichtung |
| 3 | Drehachse | 13 | Dichtung |
| 4 | Druckanschluss | 14 | Ringnut |
| 5 | Ansatz | 15 | Ringnut |
| 6 | Öffnung | 16 | Wälzlager |
| 7 | Kolben | 17 | Lagerinnenring |
| 8 | Leitung | 18 | Lageraußenring |
| 9 | Kammer | 19 | Wälzkörper |
| 10 | Äußere Ringwand | 20 | Anschlagfläche |

## Patentansprüche

1. Kupplungsnehmerzylinder (1) mit einem um eine Getriebeeingangswelle angeordneten Gehäuse (2) und einem zu diesem axial unter Druck verlagerbaren Kolben (7), **dadurch gekennzeichnet, dass** der Kolben (7) einen ringförmigen Becher bildet und einen ringförmigen axialen Ansatz (5) des Gehäuses (2) radial innen und radial außen axial übergreift.

2. Kupplungsnehmerzylinder (1) nach Anspruch 1, **dadurch gekennzeichnet, dass** der Kolben (7) aus Blech gefertigt ist.

3. Kupplungsnehmerzylinder (1) nach Anspruch 1 oder 2, **dadurch gekennzeichnet, dass** das Gehäuse (2) aus Kunststoff hergestellt ist.

4. Kupplungsnehmerzylinder (1) nach einem der Ansprüche 1 bis 3, **dadurch gekennzeichnet, dass** der axiale Ansatz (5) gegenüber dem Kolben (7) abgedichtet ist.

5. Kupplungsnehmerzylinder (1) nach Anspruch 4, **dadurch gekennzeichnet, dass** zumindest eine Dichtung (12, 13) eine Nutringdichtung ist.

6. Kupplungsnehmerzylinder (1) nach Anspruch 4, **dadurch gekennzeichnet, dass** im axialen Ansatz (5) radial außen und radial innen jeweils eine Ringnut (14, 15) vorgesehen ist, in die jeweils eine Dichtung (12, 13) eingebracht ist.

7. Kupplungsnehmerzylinder (1) nach einem der Ansprüche 1 bis 6, **dadurch gekennzeichnet, dass** an dem Kolben (7) ein Wälzlager (16) aufgenommen wird.
